# EUROPÄISCHE PATENTSCHRIFT

(11) **EP 1 103 587 B1**
(45) Veröffentlichungstag und Bekanntmachung des Hinweises auf die Patenterteilung: **17.11.2004**
(21) Anmeldenummer: 00125180.0
(22) Anmeldetag: 18.11.2000
(51) Int. Cl.: C09J 7/02, C09J 109/00

(54) **Verpackungsklebebänder**
Packaging adhesive tapes
Rubans adhésifs pour emballage

(30) Priorität: 29.11.1999 DE 19957451
(43) Veröffentlichungstag der Anmeldung: 30.05.2001
(73) Patentinhaber: tesa AG, 20253 Hamburg (DE)
(72) Erfinder: Spies, Manfred, Dr., 24576 Bad Bramstedt (DE)

(56) Entgegenhaltungen:
- GB-A- 2 137 212
- US-A- 4 400 428
- DATABASE WPI Section Ch, Week 199115 Derwent Publications Ltd., London, GB; Class A18, AN 1991-104953 XP002161591 -& JP 03 045676 A (MITSUI TOATSU CHEM INC) , 27. Februar 1991 (1991-02-27)

## Beschreibung

Die Erfindung betrifft die Entwicklung von Haftklebebändern auf Basis von Butadien/Methylmethacrylat Latices mit einem hohen Butadiengehalt und Harzdispersionen.

In der Patentliteratur existiert eine Vielzahl von Anmeldungen zur Herstellung von Verpackungsklebebändern.

Die seit langem bekannten klassischen Klebemassesyteme für Verpackungsklebebänder basieren im wesentlichen auf Naturkautschuk, Styrol-Blockcopolymeren und Polyacrylaten.

Die Naturkautschuksysteme werden üblicherweise als Lösung in einem aliphatischen Lösungsmittelgemisch eingesetzt. Wasserbasierte Naturkautschukmassen auf Basis Zentrifugenlatex sind ebenfalls bekannt. Für die Einstellung der geforderten klebtechnischen Eigenschaften ist der Zusatz von Harzen, Füllstoffen, Alterungsschutzmitteln unumgänglich. Eine Vernetzung erfolgt entweder chemisch über zugesetzte Vernetzungsagenzien, oder physikalisch über z.B. Elektronenstrahlhärtung.

Synthetische Kautschuke auf Basis von Styrol-Blockcopolymeren wurden in der Vergangenheit ebenfalls als Klebemassen für Verpackungsklebebänder beschrieben. Hierbei handelt es sich um 100% Systeme, die nach Abmischung mit Harzen und weiteren Coagenzien im geschmolzenen Zustand ohne Anwesenheit von Lösungsmitteln oder Wasser aufgetragen werden können.

Die Verwendung von Polyacrylaten als Klebemassen für Verpackungsklebebänder ist ebenfalls bekannt. Neben Lösungen aus Polyacrylaten sind in der Vergangenheit auch Polyacrylatdispersionen beschrieben worden, die nach Compoundierung mit Harzdispersionen und weiteren Coagenzien die Anforderungen einer Verpackungsklebebandmasse erfüllen. Acrylatdispersionen zeigen ein relativ schlechtes Anfaßverhalten auf Kartons, insbesondere dann, wenn das Substrat aus mehrfach recyclierten Papieren stammt, was bei Verpackungskartons zunehmend der Fall ist. Durch Zusatz von Harzdispersionen kann dieser Mangel beseitigt werden. Da Naturharzdispersionen auf Basis von Kolophoniumderivaten die Kohäsion von Acrylatmassen häufig in unerwünschter Weise beeinflussen, bedient man sich eher der kohäsiveren Kohlenwasserstoffharzdispersionen, die von verschiedenen Harzherstellern angeboten werden.

Als Trägermaterialien für Verpackungsklebebänder werden üblicherweise monooder biaxial gereckte Polyolefine, PVC-Typen oder Papiere eingesetzt.

Butadien/Styrol Latices werden im Bereich der "Pressure Sensitive Adhesives" seit vielen Jahren zur Imprägnierung und Stabilisierung von Trägermaterialien eingesetzt. Hierbei stehen Papiere Gewebe und Vliese im Vordergrund. Die lmprägnierung oder Beschichtung darf aufgrund der Anwendung keinesfalls klebrig sein. Die für diese Anwendung eingesetzten Butadien/Styrol Copolymere müssen daher einen relativ hohen Anteil an hartmachenden Monomeren enthalten, aber andererseits genügend weichmachendes Monomer, so daß das Copolymer insgesamt noch elastisch ist. Butadien/Styrol Latices mit einem Butadiengehalt von etwa 25-50% erfüllen diese Anforderung sehr gut. Filme dieser Copolymeren sind in Abhängigkeit des Butadiengehaltes mäßig elastisch bis elastisch, und nicht klebend. Derartige Copolymere sind schon seit vielen Jahren auf dem Rohstoffmarkt verfügbar (Butofan®-Typen der BASF, diverse Typen von Dow und Synthomer). Bedingt durch ihre Herstellung enthalten derartige Latices bzw. Dispersionen Emulgator-Systeme, um eine Kompatibilität zwischen der organischen und der wässrigen Phase herzustellen.

Butadien/Styrol Copolymere wurden in der Vergangenheit auch als Basispolymere für Etikettenmassen eingesetzt. Im Bereich der Etiketten kommt der Kohäsion häufig sekundäre Bedeutung zu, so daß schwach klebende Systeme nach Compoundierung mit üblichen Tackyfiem in vielen Fällen ausreichende Eigenschaften zeigen.

Als Gerüstpolymer für Verpackungsklebebandmassen sind nicht oder schwach klebende Copolymere auf Basis von Butadien/Styrol Copolymeren nur mangelhaft geeignet, da sie nur mit erheblichen Mengen an Tackyfierharzen klebrig gemacht werden können, was wiederum mit einem weitreichenden Kohäsionsverlust verbunden ist. Dieses schließt eine Anwendung als Klebemasse für Verpackungsklebebänder aus.

Butadien/Styrol Copolymere mit einem hohen Butadiengehalt sind dagegen als Gerüstpolymere für Verpackungsklebebander von hohem Interesse.

Butadien Copolymere, die als Copolymerisationspartner ein hartes und damit kohäsives Segment enthalten, sind als Gerüstpolymere für anspruchsvolle Haftklebemassen aber von grundsätzlichlichem Interesse.

Aus der JP 03 045676 A ein Klebeband mit einem Träger und einer Klebemasse bekannt, die aus einem Copolymerisat gebildet wird. Das Copolymerisat besteht aus einer Monomermischung, die sich seinerseits zusammensetzt aus
- 20 bis 70 Gew.% Butadien
- 10 bis 40 Gew.-% Styrol und/oder Methylmethacrylat und
- 10 bis 50 Gew.-% 2-Ethylhexylacrylat und/oder Butylacrylat
2-Ethylhexylacrylat und/oder Butylacrylat sind zwingend in der Klebemasse enthalten. Diese Acrylate dienen dazu, die Klebrigkeit der Klebemasse einzustellen.

Aufgabe der Erfindung war es, weitere Butadiencopolymere für die beschriebene Anwendung bereit zu stellen, die die genannten Mängel nicht aufweisen, und mit denen ein Haftklebeband gemacht werden kann das den Anforderungen einer Verpackungsklebebandes gerecht wird.

Gelöst wurde die Aufgabe durch Verwendung von Butadien/Methylmethacrylat Dispersionen mit einem hohen Butadiengehalt, die mit geeigneten Harzdispersionen abgemischt wurden. Zu den so erhaltenen Compounds können ggf. weitere Coagenzien wie z. B. Alterungsschutzmittel oder weitere Emulgatoren zugemischt werden, um den Alterungsschutz zu verbessern oder die Abrolleigenschaften weiter an die Anwendung anzupassen. Nach Beschichtung der Klebemasse auf einem Polymer- oder Papierträger ist ein Haftklebeband erhältlich, das die Anforderungen eines Verpackungsklebebandes im Hinblick auf Tack, Klebkraft, Kohäsion und Abrolleigenschaften voll erfüllt.

### Klebemassen:

Die Copolymerisation von Methylmethacrylaten mit Butadien in wässrigem Medium liefert Copolymere, die filmbildend sind, und die einen für druckempfindliches Kleben geeigneten Tg aufweisen. Butadien/Metylmethacrylat Dispersionen werden allgemein durch den Einbau geringer Mengen carboxylhaltiger Gruppen stabilisiert, was gleichzeitig die Haftung auf vielen Untergründen verbessert.

Als Klebemassen für die Erfindung können insbesondere carboxylierte Butadien/Methylmethacrylat Copolymer-Dispersionen eingesetzt werden mit einem Butadienanteil von 55-95%, vorzugsweise 60-85%, bezogen auf den Gesamtfeststoffanteil an Methylmethacrylat und Butadien, die im Gemisch mit Harzdispersionen eine hevorragende Eignung als Klebemassen für Verpackungsklebebänder zeigen. Carboxylierte derartige Copolymere enthalten insbesondere unter 10%, bevorzugt unter 5% bezogen auf den Monomergehalt an carboxylhaltigen Comonomer, insbesondere Acrylsäure, im Copolymer.

Erfindungsgemäße Butadien/Methylmethacrylat-Dispersionstypen mit einen einem Butadiengehalt >60% sind z.B. von Synthomer erhältlich.

Als Harzkomponente können sowohl Dispersionen synthetischer Harze (z.B. Kohlenwasserstoffharz, Terpenphenolharze etc.), als auch Naturharzdispersionen (z. B. Kolophoniumderivate, Polyterpene etc.) verwendet werden.

Kohlenwasserstoffharzdispersionen sind aufgrund der hohen Kohäsion deutlich zu bevorzugen. Der Schmelzpunkt der Basisharze sollte im Bereich 50-120°C liegen, vorzugsweise 60-100°C. Bezogen auf den Gesamtfeststoffgehalt an Butadien/Methylmethacrylat Copolymer und Harz sollte der Harzanteil im Bereich 5-60%, vorzugsweise 10-40% liegen. Zur gezielten Einstellung der klebtechnischen Eigenschaften können auch Mischungen aus unterschiedlichen Harzen eingesetzt werden. Zur Verbesserung des Alterungsverhaltens können Dispersionen üblicher Alterungsschutzmittel zugesetzt werden, die aus dem Bereich der Elastomeren hinreichend bekannt sind.

Weiterhin können bei Bedarf weiterer Additive zur Anpassung der Produkteigenschaften zugesetzt werden, wie z.B. Füllstoffe, Weichharze, Öle oder Emulgatoren z.B. vom Typ alkoxylierter Alkylphenole. Mit diesen Additiven gelingt es, die Abrolleigenschaften in gewünschter Weise zu beeinflussen.

Die Einstellung der Adhäsion/Kohäsion Balance kann durch chemische Vernetzung über die vorhandenen Carboxylgruppen durch zugesetzte Vernetzungsagenzien wie z.B. Aluminium- oder Titanchelat erfolgen. Eine strahlenchemische Vernetzung ist im Gegensatz zu vielen Styrol-Blockcopolymeren aufgrund des ausreichend hohen Molekulargewichtes ebenfalls möglich.

Eine Übersicht über mögliche Harzdispersionen findet sich in: Donatas Satas, *Handbook of Pressure Sensitive Adhesive Technology,* 2. Edition Resin Dispersion by Anne Z. Casey S. 545-566

Erfindungsgemäße Harzdispersionen sind z.B. über Hercules (NL) erhältlich.

Der Klebemasseauftrag beträgt 10-120g/m², bevorzugt 15-40g/m².

### Trägermaterialien:

Als Trägermaterialien für die Erfindung kommen die für Verpackungsanwendungen üblichen Trägermaterialien in Betracht. Hierbei handelt es sich im wesentlichen um Folien und Papiere, die aufgrund ihrer Eigenschaften und des Herstellungs- bzw. Nachbehandlungsprozeßes die geforderten mechanischen Eigenschaften aufweisen.

Im Falle der Folien handelt es sich im wesentlichen um Polyethylen, Polypropylen, Polyvinylchlorid und andere für die Anwendung üblichen Polymere und Copolymere, die sowohl einschichtig als auch mehrschichtig eingesetzt werden können. Bei mehrschichtigen Systemen kann auch die Zusammensetzung und die Dicke der einzelnen Schichten variieren.

Monoaxial und biaxial gereckte Polypropylene werden häufig für Verpackungsklebebänder, Strapping Tapes und andere Klebebänder eingesetzt, bei denen eine definierte Reißfestigkeit von nicht unerheblicher Bedeutung ist.

Monoaxial gereckte Polypropylene zeigen eine besonders gute Reißfestigkeit und geringe Dehnung in Längsrichtung. Derartige Trägermaterialien werden häufig für Strapping Anwendungen eingesetzt.

Zur Erzielung gleichmäßiger Festigkeitswerte in Längs- und Querrichtung müssen Folien biaxial gereckt werden.

Sowohl mono- als auch biaxial gereckte Polypropylene und Polyethylene sind als Trägermaterial für die Erfindung besonders geeignet. Die Reckverhältnisse orientieren sich dabei an den entsprechenden Anforderungen.

Es können sowohl Blas-, als auch Flachfolie eingesetzt werden.

Die Dicken der Folien liegen zwischen 10 und 250 µm, bevorzugt zwischen 20 und 120 µm.

Um eine ausreichende Haftung der Klebemasse auf dem Trägermaterial sicherzustellen muß die Oberflächenenergie der zu beschichtenden Seite innerhalb eines definierten Bereiches liegen. Dieses kann entweder über eine zusätzliche Beschichtung mit einem Primer gewährleistet werden, oder über eine Oberflächenbehandlung. Bevorzugt wird eine Corona- oder Flammenvorbehandlung, mit der die gewünschten Oberflächenenergien erreicht werden können. Die Oberflächenenergien liegt in einem Bereich von 25-50mN/m, bevorzugt 30-45 mN/m.

Als Trägermaterialien kommen desweiteren imprägnierte und hochgeleimte definiert gekreppte Papiere mit Reißfestigkeiten in Betracht, die den gewünschten Anforderungen genügen. In Abhängigkeit der gewünschten Anwendung können sowohl Papiere mit höherer Längs-Dehnbarkeit als Quer-Dehnbarkeit eingesetzt werden, als auch Papiere mit höherer Quer-Dehnbarkeit als Längs-Dehnbarkeit, sowohl in gebleichter, als auch in der umweltfreundlichen ungebleichten Version.

Alle Prozentangaben beziehen sich auf Gewichts-%.

### Beispiele:

### Beispiel 1:

Eine Dispersionsklebemasse bestehend aus 70% einer carboxylierten Butadien/Methylmethacrylat Dispersion mit einem Butadiengehalt von etwa 70% (VL 10533, Butadien/Methylmethacrylat Dispersion der Firma Synthomer) und 30% Tacolyn 1070 (KW-Harzdispersion der Firma Hercules) wird mit einem Drahtrakel kontinuierlich mit einer Schichtdicke von 25 g/m² auf einer mit 35 mN/m coronavorbehandelten 30µm dicken BOPP Folie beschichtet. Die Prozentangaben sind auf den Feststoff-Gehalt bezogen.

### Technische Bedingungen:

| | |
|---|---|
| Maschine | Technikumsbeschichtungsanlage |
| Auftragswerk | Drahtrakel |
| Trägerbahngeschwindigkeit | 3,5 m/min |

Das beschichtete Material wird anschließend thermisch getrocknet:

| | |
|---|---|
| Trocknung (Schwebedüsentrockner) | Zone 1: 80 °C |
| | Zone 2: 85 °C |

Das Ballenmaterial wird anschließend zu Rollen geschnitten.

### Klebtechnische Daten (Frischzustand):

Klebkraft/Stahl: 2,20N/cm
Microscherweg (40°C, 3N: 10 µm
Thermoscherweg (5°C/min, 3N): 150°C

### Beispiel 2:

Eine Dispersionsklebemasse bestehend aus 80% einer carboxylierten Butadien/Methylmethacrylat Dispersion mit einem Butadiengehalt von 70% (VL 10511, Butadien/Methyimethacrylat Dispersion der Firma Synthomer) und 20% Tacolyn 1070 (KW-Harzdispersion der Firma Hercules) wird mit einem Drahtrakel kontinuierlich mit einer Schichtdicke von 25 g/m² auf einer mit 35 mN/m coronavorbehandelten 30µm dicken BOPP Folie beschichtet. Die Prozentangaben sind auf den Feststoffgehalt bezogen.

### Technische Bedingungen:

| | |
|---|---|
| Maschine | Technikumsbeschichtungsanlage |
| Auftragswerk | Drahtrakel |
| Trägerbahngeschwindigkeit | 3,5 m/min |

Das beschichtete Material wird anschließend thermisch getrocknet:

| | |
|---|---|
| Trocknung (Schwebedüsentrockner) | Zone 1: 80 °C |
| | Zone 2: 85 °C |

Das Ballenmaterial wird anschließend zu Rollen geschnitten.

### Klebtechnische Daten (Frischzustand):

Klebkraft/Stahl: 2,40N/cm
Microscherweg (40°C, 3N: 156 pm
Thermoscherweg (5°C/min, 3N,): 58°C

## Patentansprüche

1. Verpackungsklebeband mit einem Träger und einer Klebemasse, **dadurch gekennzeichnet, dass** die Klebemasse aus einer Butadien/Methylmethacrylatcopolymer-Dispersion mit einem Butadiengehalt von mindestens 55 % in Abmischung mit Harzdispersion besteht, auf dem Träger beschichtet und anschließend getrocknet ist, wobei die Oberflächenenergie des Trägers in einem Bereich von 25 bis 50 mN/m liegt.

2. Verpackungsklebeband nach Anspruch 1 **dadurch gekennzeichnet, dass** die Harzdispersion vom Typ einer Kohlenwasserstoffharzdispersion ist mit einem Erweichungspunkt des Basisharzes zwischen 50 und 120°C.

3. Verpackungsklebeband nach Anspruch 1 **dadurch gekennzeichnet, dass** die Harzdispersion ein Gemisch aus mehreren Kohlenwasserstoffharzdispersionen oder ein Gemisch aus Kohlenwasserstoffharzdispersionen mit Naturharzdispersionen ist.

4. Verpackungsklebeband nach Anspruch 1 **dadurch gekennzeichnet, dass** die Klebemasse durch zugesetzte übliche Vernetzer (z.B. Aluminium- und Titanchelat, weitere Metallkomplexe, Isocyanate, Epoxid, etc.) chemisch vernetzt ist.

5. Verpackungsklebeband nach Anspruch 1 **dadurch gekennzeichnet, dass** die Klebemasse physikalisch vemetzt ist, insbesondere durch ESH.

6. Verpackungsklebeband nach Anspruch 1 **dadurch gekennzeichnet, dass** der Träger ein gerecktes oder ungerecktes Polyolefin mit einer Foliendicke zwischen 20 und 120 µm, ein PVC oder ein Papier ist.

7. Verpackungsklebeband nach Anspruch 1 **dadurch gekennzeichnet, dass** der Masseauftrag der Klebemasse 10-120 g/m² beträgt.

8. Verpackungsklebeband nach Anspruch 1 **dadurch gekennzeichnet, dass** zur Verbesserung der Masseverankerung eine physikalische Oberflächenbehandlung des Trägers erfolgt ist oder der Träger mit einem Primer vorbehandelt ist.

9. Verpackungsklebeband nach Anspruch 1, **dadurch gekennzeichnet, dass** die Butadien/Methylmethacrylatcopolymer-Dispersion vom Typ einer carboxylierten Butadien/Methylmethacrylatcoplymer-Dispersion ist.

10. Verpackungsklebeband nach Anspruch 1, **dadurch gekennzeichnet, dass** der Harzanteil im Bereich 5 - 60 %, insbesondere 10 - 40 % bezogen auf den Gesamtfeststoffgehalt liegt.

11. Verwendung eines Verpackungsklebebandes nach einem der Ansprüche 1 - 10 zum Verkleben mit hoher Anfassklebkraft und hohen Kohäsionswerten insbesondere auf recyclierten Papieren oder Pappen.

## Claims

1. Adhesive packaging tape comprising a backing and an adhesive composition, **characterized in that** the adhesive composition comprises a butadiene/methyl methacrylate copolymer dispersion having a butadiene content of at least 55% in a blend with resin dispersion, is coated onto the backing and is then dried, the surface energy of the backing being situated within a range of 25 to 50 mN/m.

2. Adhesive packaging tape according to Claim 1, **characterized in that** the resin dispersion is of the hydrocarbon resin dispersion type with a softening point of the base resin of between 50 and 120°C.

3. Adhesive packaging tape according to Claim 1, **characterized in that** the resin dispersion is a mixture of two or more hydrocarbon resin dispersions or a mixture of hydrocarbon resin dispersions with natural resin dispersions.

4. Adhesive packaging tape according to Claim 1, **characterized in that** the adhesive composition is chemically crosslinked by means of added customary crosslinkers (e.g., aluminium and titanium chelate, other metal complexes, isocyanates, epoxide, etc.).

5. Adhesive packaging tape according to Claim 1, **characterized in that** the adhesive composition is physically crosslinked, in particular by means of EBC.

6. Adhesive packaging tape according to Claim 1, **characterized in that** the backing is an oriented or unoriented polyolefin having a film thickness of between 20 and 120 µm, a PVC or a paper.

7. Adhesive packaging tape according to Claim 1, **characterized in that** the application rate of the adhesive composition is 10-120 g/m².

8. Adhesive packaging tape according to Claim 1, **characterized in that**, to improve the anchoring of the composition, the backing has been physically surface treated or pretreated with a primer.

9. Adhesive packaging tape according to Claim 1, **characterized in that** the butadiene/methyl methacrylate copolymer dispersion is of the carboxylated butadiene/methyl methacrylate copolymer dispersion type.

10. Adhesive packaging tape according to Claim 1, **characterized in that** the resin fraction is situated in the range 5 - 60%, especially 10 - 40%, based on the overall solids content.

11. Use of an adhesive packaging tape according to any of Claims 1 - 10 for bonding with high initial bond strength and high cohesion values in particular on recycled papers or cardboards.

## Revendications

1. Bande adhésive pour emballage présentant un support et une masse adhésive, **caractérisée en ce que** la masse adhésive est constituée par une dispersion de copolymère de butadiène/méthacrylate de méthyle avec une teneur en butadiène d'au moins 55% en mélange avec une dispersion de résine, est revêtue sur le support et est ensuite séchée, l'énergie superficielle du support se situant dans une plage de 25 à 50 mN/m.

2. Bande adhésive pour emballage selon la revendication 1, **caractérisée en ce que** la dispersion de résine est du type d'une dispersion de résine hydrocarbonée avec un point de ramollissement de la résine de base entre 50 et 120°C.

3. Bande adhésive pour emballage selon la revendication 1, **caractérisée en ce que** la dispersion de résine est un mélange de plusieurs dispersions de résine hydrocarbonée ou un mélange de dispersions de résine hydrocarbonée avec des dispersions de résine naturelle.

4. Bande adhésive pour emballage selon la revendication 1, **caractérisée en ce que** la masse adhésive est réticulée chimiquement par des réticulants usuels ajoutés (par exemple un chélate d'aluminium et de titane, d'autres complexes métalliques, des isocyanates, un époxyde, etc.).

5. Bande adhésive pour emballage selon la revendication 1, **caractérisée en ce que** la masse adhésive est réticulée physiquement, en particulier par un durcissement sous l'effet d'un rayonnement électronique.

6. Bande adhésive pour emballage selon la revendication 1, **caractérisée en ce que** le support est une polyoléfine étirée ou non étirée présentant une épaisseur de feuille entre 20 et 120 µm, un PVC ou un papier.

7. Bande adhésive pour emballage selon la revendication 1, **caractérisée en ce que** la masse adhésive est appliquée en une masse de 10 à 120 g/m².

8. Bande adhésive pour emballage selon la revendication 1, **caractérisée en ce que**, pour améliorer l'ancrage de la masse, on a réalisé un traitement de surface physique du support ou le support a été prétraité avec un apprêt.

9. Bande adhésive pour emballage selon la revendication 1, **caractérisée en ce que** la dispersion de copolymère de butadiène/méthacrylate de méthyle est du type d'une dispersion de copolymère carboxylé de butadiène/méthacrylate de méthyle.

10. Bande adhésive pour emballage selon la revendication 1, **caractérisée en ce que** la proportion de résine se situe dans la plage de 5 à 60%, en particulier de 10 à 40% par rapport à la teneur totale en solides.

11. Utilisation d'une bande adhésive pour emballage selon l'une quelconque des revendications 1 à 10 pour le collage avec une adhésivité de toucher élevée et des valeurs de cohésion élevées, en particulier sur des papiers ou des cartons recyclés.
